# EUROPÄISCHE PATENTSCHRIFT

(11) **EP 4 165 502 B1**
(45) Veröffentlichungstag und Bekanntmachung des Hinweises auf die Patenterteilung: **30.07.2025**
(21) Anmeldenummer: 21762426.1
(22) Anmeldetag: 11.08.2021
(51) Int. Cl.: G06F 9/445, G06F 8/656, G06F 9/50, G06F 15/78

(54) **COMPUTER-IMPLEMENTIERTES VERFAHREN UND SYSTEM ZUR DYNAMISCHEN AUSFÜHRUNG EINES ANWENDUNGSPROGRAMMS DURCH EINE PLATTFORM**
COMPUTER-IMPLEMENTED METHOD AND SYSTEM FOR DYNAMICALLY EXECUTING AN APPLICATION PROGRAM THROUGH A PLATFORM
PROCÉDÉ ET SYSTÈME IMPLÉMENTÉS PAR ORDINATEUR DESTINÉS À L'EXÉCUTION DYNAMIQUE D'UN PROGRAMME D'APPLICATION À L'AIDE D'UNE PLATEFORME

(30) Priorität: 26.08.2020 EP 20192909
(43) Veröffentlichungstag der Anmeldung: 19.04.2023
(73) Patentinhaber: Siemens Aktiengesellschaft, 80333 München (DE)
(72) Erfinder: GEIGER, Sebastian, 1050 Wien (AT); TAUCHER, Herbert, 1190 Wien (AT); ZAHORCAK, Vladimir, 900 32 Borinka (SK); CECH, Christian, 2483 Ebreichsdorf (AT)
(74) Vertreter: Siemens Patent Attorneys
(86) Internationale Anmeldenummer: PCT/EP2021/072417
(87) Internationale Veröffentlichungsnummer: WO 2022/043065

(56) Entgegenhaltungen:
- WO-A1-2013/192231
- WO-A1-2013/192236
- US-B1- 10 031 993

## Beschreibung

Die Erfindung betrifft ein computer-implementiertes Verfahren und ein System zur dynamischen Ausführung zumindest eines Anwendungsprogramms durch eine Plattform, welche einen Prozessor mit einem Programmspeicher und eine programmierbare Logik aufweist, wobei der Prozessor und die programmierbare Logik einen Programmiermodus und einen Ausführungsmodus unterstützen, und im Programmiermodus von einer Anwendungsdatenbank zumindest ein erstes Anwendungsprogramm mit zumindest einem ersten Modul in den Programmspeicher und/oder in die programmierbare Logik ausführbar als zumindest ein erster Programmcode geladen und programmiert wird, und im Ausführungsmodus der zumindest eine erste Programmcode ausgeführt wird.

Programmierbare Logiken, FPGAs, ermöglichen die Implementierung einer hardwarebeschleunigten Anwendungslogik. Derzeit müssen Anwendungen jedoch auf eine bestimmte FPGA-Hardwareplattform zugeschnitten werden.

Eine Aktualisierung der hardwarebeschleunigten Anwendungslogik zur Laufzeit ist nicht möglich oder kann nur manuell durchgeführt werden.

Anwendungsentwickler können auch kein einziges Anwendungspaket entwickeln, das auf einer Reihe von Plattformen einschließlich Plattformen ohne FPGA funktioniert, wie beispielsweise in der Cloud, wo die fehlende Hardwarebeschleunigung durch parallele Ausführung mehrerer Anwendungsinstanzen ausgeglichen werden kann.

Diese Einschränkungen erfüllen nicht mehr die steigenden Anforderungen von IT/OT-Prozessen für eine schnelle und flexible Bereitstellung von Softwarekomponenten, die durch die Einführung moderner agiler Softwarebereitstellungsprozesse, das heißt DevOps, erforderlich sind.

Die meisten FPGAs im Stand der Technik werden zum Startzeitpunkt der Hardware konfiguriert. Dies erfordert die Erstellung eines Boot-Images mit einem Konfigurations-Bitstream für das FPGA und einen Neustart der Hardware, um das neue Image zu laden.

Moderne FPGAs unterstützen die dynamische teilweise Neukonfiguration der programmierbaren Logik auf dem FPGA. Dadurch kann ein Teil der programmierbaren Logik zur Laufzeit neu konfiguriert werden.

Diese Funktion wird entweder zur Entwicklungszeit verwendet, um das FPGA teilweise mithilfe von Entwicklungstools neu zu konfigurieren, sofern der FPGA-Host beziehungsweise das Gerät direkt mit der Entwicklungs-/Debug-Schnittstelle wie USB verbunden ist, oder während des Betriebs mithilfe komplizierter Host-Programmierschnittstellen.

Für Anwendungen, die auf verschiedenen Plattformen ausgeführt werden müssen, besteht der etablierte Ansatz darin, zwei verschiedene Anwendungspakete zu erstellen.

Eine Paketversion unterstützt Allzweck-CPUs und eine andere Paketversion unterstützt FPGA-beschleunigte Logik für eine bestimmte Hardwareplattform.

Dieser Prozess hat verschiedene Nachteile. Die Erstellung von zwei separaten Anwendungspaketen erfordert unterschiedliche Prozesse und Entwicklungsschritte, die häufig manuelle Schritte umfassen.

Die Pakete werden dann abhängig von den Hardwarefunktionen jeder Plattform separat auf den jeweiligen Zielplattformen bereitgestellt.

Dies erhöht den Entwicklungs- und Wartungsaufwand für diese separaten Pakete und führt aufgrund der manuellen Schritte zu längeren Bereitstellungszeiten.

Um eine sichere Aktualisierung in der Ausführungsprozedur zu unterstützen, muss die Anwendungslogik zur Laufzeit des Geräts aktualisiert werden. Während dies für softwarebasierte Mikrodienste erreicht werden kann, wird dies derzeit für Mikrodienste mit hardwarebeschleunigter Anwendungslogik nicht vollautomatisch durchgeführt.

Mehrere bestehende Veröffentlichungen haben sich auf das Konzept der teilweisen Rekonfiguration von FPGAs konzentriert, welches die Grundlage für diese Erfindung bildet.

In "A Cloud-Scale Acceleration Architecture", Adrian M. Caulfield et al., 2016 49th Annual IEEE/ACM International Symposium on Microarchitecture (MICRO), beschreiben die Autoren die Verwendung rekonfigurierbarer Logik, um sowohl Funktionen der Netzwerkebene als auch Anwendungslogik mithilfe rekonfigurierbarer FPGAs zu beschleunigen, sowie um eine direkte FPGA-zu-FPGA-Netzwerkkommunikation zu realisieren.

Darüber hinaus ist das Konzept der teilweisen Rekonfiguration von FPGAs eine etablierte Technik, die in verschiedenen Veröffentlichungen beschrieben wurde, z. B. "Modular dynamic reconfiguration in Virtex FPGAs", P. Sedcole, B. Blodget, T. Becker, J. Anderson, P. Lysaght, IEE Proceedings-Computers and Digital Techniques, Volume 153, Issue 3, "Incremental reconfiguration for pipelined applications", H. Schmit, Proceedings, The 5th Annual IEEE Symposium on Field-Programmable Custom Computing Machines Cat. No.97TB100186, oder "Dynamic hardware plugins in an FPGA with partial run-time reconfiguration", Edson L. Horta, John W. Lockwood, David E. Taylor, David Parlour, DAC '02: Proceedings of the 39th annual Design Automation Conference, June 2002, p. 343-348.

In "An Efficient Algorithm for Online Management of 2D Area of Partially Reconfigurable FPGAs", Jin Cui, Qingxu Deng, Xiuqiang He, Zonghua Gu, IEEE 2007 Design, Automation & Test in Europe Conference & Exhibition, wird ein effizienter Algorithmus zum Auffinden des vollständigen Satzes maximal leerer Rechtecke auf einem teilweise zur Laufzeit rekonfigurierbaren 2D-FPGA beschrieben.

In "A framework for secure remote updating of bitstream on runtime reconfigurable embedded platforms", Tran Thanh, Pham Ngoc Nam, Tran Hoang Vu, Nguyen Van Cuong, IEEE 2012 Fourth International Conference on Communications and Electronics (ICCE), wird eine sichere und effiziente Remote-Aktualisierung von FPGA-Bitstream auf zur Laufzeit rekonfigurierbaren eingebetteten Plattformen beschrieben, um eine Lösung nur in Hardware, also beispielsweise ohne Betriebssystemunterstützung, zu realisieren.

Plattformen nach dem Stand der Technik weisen einen oder mehrere Prozessoren mit einem oder mehreren Kernen auf, sowie umfassen eine programmierbare Logik, welche ganz oder teilweise programmierbar und löschbar ist.

Auf derartige Plattformen wird üblicherweise ein Anwendungsprogramm entwickelt, welches auf die Plattform angepasst ist, mit Treibern kompiliert wird und in die Plattform einmalig programmiert wird. Dies hat jedoch den Nachteil, unflexibel zu sein, Änderungen nur aufwändig durchgeführt werden können und das Anwendungsprogramm nicht immer mit einer optimalen Performance ausgeführt werden kann, da Betriebsparameter der Plattform, wie Speicherbelegung, eine stark variable Anzahl eingehender Alarme, eine Netzwerkanbindung mit lastabhängiger Datenübertragungsrate, die Betriebstemperatur der Plattform während bestimmter Tageszeiten usw. nicht berücksichtigt ausreichend werden.

In der Veröffentlichung WO 2013/192231 A1 ist ein System mit einem Prozessor und einem FPGA gezeigt, bei welchem ein Prozess-Scheduler des Betriebssystems der gemeinsamen Plattform die Ausführung von Programmcodes entweder dem Prozessor oder dem FPGA statisch der dynamisch zuweist.

In der Veröffentlichung WO 2013/192236 A1 ist ebenfalls ein System mit einem Prozessor und einem FPGA gezeigt, bei welchem ein Prozess-Scheduler des Betriebssystems der gemeinsamen Plattform die Ausführung von Programmcodes entweder dem Prozessor oder dem FPGA statisch der dynamisch zuweist.

Es ist die Aufgabe der Erfindung ein Verfahren und ein System bereitzustellen, mit welchem eine flexible, während des Betriebs einer Plattform mit einem Prozessor und einer programmierbaren Logik für ein Anwendungsprogramm eine NeuProgrammierung der Plattform ermöglicht wird, wobei das Anwendungsprogramm von einer mit der Plattform verbundenen Anwendungsdatenbank bereitgestellt werden soll.

Die Aufgabe wird durch ein Verfahren eingangs genannter Art gelöst, wobei im Ausführungsmodus anhand zumindest eines vorgegebenen Kriteriums durch die programmierbare Logik geprüft wird, ob ein zweites Anwendungsprogramm mit zumindest einem zweiten Modul aus der Anwendungsdatenbank geladen werden soll, und wenn dies zutrifft, in den Programmiermodus gewechselt wird, und zumindest das zumindest eine zweiten Modul in die programmierbare Logik ausführbar als zumindest ein zweiter Programmcode geladen wird, dann in den Ausführungsmodus gewechselt wird, in welchem der zumindest eine zweite Programmcode ausgeführt wird.

Die Bezeichnung "ausführbar" bedeutet im vorliegenden Zusammenhang, dass ein Programmcode eines Anwendungsprogramms spezifisch auf eine Zielplattform zusammengesetzt und kompiliert ist, und bei einer Speicherung in einem Programmspeicher oder in der programmierbaren Logik auf der Zielplattform direkt ausgeführt werden kann.

Beim Zusammensetzen können Programmbibliotheken, beispielsweise für verschiedene Treiber, wie ein "FPGA Region Driver", ein "FPGA Manager Driver", ein "FPGA Bridge Driver" oder ein "Vendor FPGA Driver" berücksichtigt werden.

Dabei werden folgende Aspekt berücksichtigt:
- es existiert ein Treiber auf Betriebssystemebene der im "Progammiermodus" Zugriff auf die programmierbare Logik gewährt, und
- es existiert ein Treiber auf Betriebssystemebene die einzelnen re-konfigurierbaren Partitionen der programmierbaren Logik verwaltet und den Zugriff auf solche synchronisiert, was in den Kontext eines FPGA Region Driver fällt, und
- es existiert ein Treiber der im "Ausführungsmodus" Zugriff auf die geladene Applikationslogik gewährt.

Einzelne Treiber können Teile beispielsweise ihrer Funktionalität in einen FPGA auslagern.

Ist der kompilierte Programmcode zur Speicherung und Ausführung in der programmierbaren Logik vorgesehen, so impliziert "ausführbar" auch die Speicherung beziehungsweise entsprechende Programmierung der programmierbaren Logik.

Es können beispielsweise beim Kompilieren des Anwendungsprogramms mehrere Module erzeugt werden, welche zur Ausführung durch den Prozessor oder die programmierbare Logik vorgesehen sind.

Der Prozessor kann mehrere Kerne umfassen, auf welchen unterschiedliche Module ausgeführt werden.

Durch die programmierbare Logik können mehrere, voneinander unabhängige Logik-Module realisiert werden.

Es ist klar, dass nach einer Programmierung vom Programmiermodus in den Ausführungsmodus umgeschaltet werden muss. Dies kann automatisch erfolgen, beispielweise nach einer erfolgreichen Programmierung der Logik.

Falls kein expliziter Programmiermodus vorgesehen ist, beispielsweise bei einem Prozessor, so kann der Programmiermodus als das Bereitstellen eines neuen Programmcodes im Programmspeicher zur Ausführung durch den Prozessor angesehen werden.

Ein Umschalten beziehungsweise Wechseln zwischen dem Ausführungsmodus und dem Programmiermodus kann durch den Prozessor oder die programmierbare Logik veranlasst beziehungsweise durchgeführt werden.

Dabei kann zumindest ein vorgegebenes Kriterium angewandt werden, beispielsweise eine Ressourcen-Auslastung des Prozessors oder der programmierbaren Logik.

Dadurch kann erreicht werden, dass das Anwendungsprogramm selbst darüber entscheiden kann, in welcher Form, nämlich entweder durch den Prozessor oder durch die programmierbare Logik, der Programmcode ausgeführt werden kann.

Dadurch ergibt sich eine hohe Flexibilität in der Programmausführung und eine sehr hohe Effizienz bei der Ausführung selbst.

Da die Ausführung des Programmcodes weniger von Ausführungsvorgaben eines Betriebssystems der Plattform abhängig ist, kann die Einflussnahme eines Prozess-Schedulers des Betriebssystems reduziert werden und insbesondere die dynamische Ausführungsleistung der Plattform insgesamt gesteigert werden.

Daten oder Programmcodes können beispielsweise durch den Prozessor oder auch durch DMA (engl. "direct memory access") in den Programmspeicher bereitgestellt werden.

Eine hardwarebeschleunigte Anwendungslogik, die auf flexible Weise auf FPGAs bereitgestellt werden kann, kann auch als "Hardware-Microservice" bezeichnet werden.

Demgegenüber stehen "Software-Microservices", die ausschließlich auf Allzweck-CPUs ausgeführt werden.

Ein Hardware-Microservice umfasst:
- Ein Bitstrom oder eine Bitsequenz für die programmierbare Logik (PL) des FPGA mit der kompilierten Anwendungslogik.
- Ein Betriebssystemtreiber, um vom Benutzerbereich aus auf eine Anwendungslogik in der programmierbaren Logik zuzugreifen.
- Eine User-Space-Implementierung, die Schnittstellen zur hardwarebeschleunigten Anwendungslogik zur Verwendung durch andere Mikrodienste bietet.

Unter einer dynamischen Ausführung eines oder mehrerer Anwendungsprogramme durch eine Plattform wird im vorliegenden Zusammenhang verstanden, dass während der Ausführung eine Konfigurationsänderung vollzogen wird, ob durch den Prozessor oder die programmierbare Logik das Anwendungsprogramm beziehungsweise dessen Programmcode oder Teile dessen, wie Module oder "Microservices", ausgeführt wird.

Module oder "Microservices" können beispielsweise durch ein weiteres, zweites Anwendungsprogramm definiert sein, das dieselbe Aufgabe erledigt, wie ein erstes Anwendungsprogramm. In diesem Fall unterscheiden sich die ausführbaren Programmcodes, das erste und zweite Anwendungsprogramm können aber identisch sein und sich nur in der Implementierung, das heißt in deren Modulen beziehungsweise Programmcodes unterscheiden.

Ein Programmcode, ein Modul oder ein Mikroservice kann eine Implementierung eines Anwendungsprogramms oder eines Teils davon sein.

Es sind mehrere verschiedene Implementierungen eines Anwendungsprogramms möglich, beispielsweise für verschiedene Plattformen oder für verschiedene Konfigurationen innerhalb des Anwendungsprogramms, wie variable Verteilungen von Logik- und Software-Modulen, das heißt Microservices.

Der vorher genannte Bitstrom eines Microservices kann ebenfalls eine Implementierung eines Anwendungsprogramms sein.

Der erste Programmcode kann ein, auf eine Zielplattform optimierter und/oder gemäß einer Nutzervorgabe oder der aktuellen Performance der Plattform konfigurierter, ausführbaren Programmcode des ersten Anwendungsprogramms sein.

Der zweite Programmcode kann ein, auf eine Zielplattform optimierter und/oder gemäß einer Nutzervorgabe oder der aktuellen Performance der Plattform konfigurierter, ausführbaren Programmcode des zweiten Anwendungsprogramms sein, welches zweite Anwendungsprogramm dem ersten Anwendungsprogramm entsprechen kann.

Die Ausführung eines Anwendungsprogramms entspricht der Ausführung des Programmcodes auf der Plattform im Ausführungsmodus.

Dadurch kann eine Verbesserung der Performance, aber auch eine vereinfachte Lizensierung von Software aus Bibliotheken erreicht werden, da eine Optimierung der Software erfolgt.

Eine Lizensierung eines Hardware-Mikrodienstes kann eine komplexe Implementierung einer Lizenz-Prüfung enthalten, welche Resources benötigen, die wiederum der Plattform nicht für die Ausführung des Anwendungsprogramms zur Verfügung stehen. Es kann aber auch vorgesehen sein, dass für die Implementierung desselben Mikrodienstes in Software keine Lizenz erforderlich ist. Dementsprechend kann beispielsweise die Lizenz eine Entscheidungsoption für die Implementierung des Mikrodienstes sein.

Der Programmiermodus kann für eine programmierbare Logik beispielsweise ein spezieller Betriebsmodus sein, in welchem logische Gatter eines FPGAs konfiguriert werden. Eine gleichzeitige Ausführung kann unterbunden sein.

Der Programmiermodus eines Prozessors kann beispielsweise dessen Ausführungsmodus entsprechen, das heißt der Programmspeicher des Mikroprozessors kann sich während der Ausführung eines Programmcodes verändern.

In einer Weiterbildung der Erfindung ist es vorgesehen, dass bei der Prüfung, ob das zweite Anwendungsprogramm geladen werden soll, die Auslastung des Prozessors, des Arbeitsspeichers des Prozessors, des Programmspeichers, oder der Programmlogik bei Ausführung des ersten Anwendungsprogramms bestimmt und dementsprechend berücksichtigt wird.

Dadurch kann eine dynamische Anpassung des Anwendungsprogramms erreicht werden und dadurch eine optimale Auslastung der Ressourcen der Plattform oder auch eine optimale Performance für die Ausführung des Anwendungsprogramms erzielt.

In einer Weiterbildung der Erfindung ist es vorgesehen, dass bei der Prüfung, ob das zweite Anwendungsprogramm geladen werden soll, eine Auslastung des Prozessors, des Arbeitsspeichers des Prozessors, des Programmspeichers, oder der Programmlogik bei Ausführung des zweiten Anwendungsprogramms berechnet, vorzugsweise geschätzt, und dementsprechend berücksichtigt wird.

Dadurch kann eine dynamische Anpassung des Anwendungsprogramms an einen geschätzten, zukünftigen Ressourcenbedarf der Plattform erreicht werden und dadurch eine optimale Auslastung der Ressourcen der Plattform oder auch eine optimale Performance für die Ausführung des Anwendungsprogramms erzielt.

In einer Weiterbildung der Erfindung ist es vorgesehen, dass mithilfe des Prozessors und/oder der programmierbaren Logik festgelegt wird, ob das erste und/oder das zweite Modul im Programmspeicher oder in der programmierbaren Logik gespeichert werden soll, vorzugsweise im Ausführungsmodus.

Dadurch kann eine dynamische Anpassung des Anwendungsprogramms während der Ausführung des Programmcodes durch den Programmcode selbst erfolgen, und somit eine optimale Auslastung der Ressourcen der Plattform oder auch eine optimale Performance für die Ausführung des Anwendungsprogramms erzielt werden.

Dadurch kann die Komplexität der Plattform einfach gehalten werden.

In einer Weiterbildung der Erfindung ist es vorgesehen, dass ein Anwendungs-Verwaltungsmodul, welches durch ein von der Plattform umfasstes Verwaltungssystem ausgeführt wird und welches in die Verbindung zwischen der Anwendungsdatenbank und dem Prozessor und der programmierbaren Logik eingefügt ist, festlegt, ob das erste und/oder das zumindest eine zweite Modul im Programmspeicher oder in der programmierbaren Logik gespeichert wird, vorzugsweise im Ausführungsmodus.

Dadurch kann eine dynamische Anpassung des Anwendungsprogramms während der Ausführung des Programmcodes durch ein entsprechendes Verwaltungsmodul erfolgen, und somit eine optimale Auslastung der Ressourcen der Plattform oder auch eine optimale Performance für die Ausführung des Anwendungsprogramms erzielt werden.

Das Verwaltungsmodul ist Teil eines Verwaltungssystems, welches dazu eingerichtet ist, die Plattform zu verwalten, zu konfigurieren, Statusabfragen der Plattform durchzuführen oder eine Verbindung zu der Anwendungsdatenbank bereitstellt.

Durch Nutzung des Verwaltungsmoduls für die dynamische Anpassung des Programmcodes wird die Performance bei der Ausführung des Programmcodes nicht beeinträchtigt.

In einer Weiterbildung der Erfindung ist es vorgesehen, dass das ausführbar geladene, zumindest eine zweite Modul einen entsprechenden zweiten Prozessor-Programmcode zur Ausführung durch den Prozessor im Programmspeicher, sowie einen entsprechenden zweiten Logik-Programmcode zur Ausführung durch die programmierbare Logik in der programmierbaren Logik umfasst.

Dadurch wird erreicht, dass für dasselbe Modul sowohl ein ausführbarer Programmcode zur Ausführung durch den Prozessor als auch ein ausführbarer Programmcode zur Ausführung durch die programmierbare Logik bereitstehen und ein dynamisches Umschalten zwischen diesen beiden Programmcodes ermöglicht ist.

Dies kann vorteilhaft dazu genutzt werden, um beispielsweise performanceabhängig den gewünschten Programmcode auszuwählen und auszuführen, ohne dass eine entsprechende Programmierung im Programmiermodus unmittelbar zuvor erforderlich ist.

In einer Weiterbildung der Erfindung ist es vorgesehen, dass das vorgegebene Kriterium das Überschreiten eines betrieblichen Grenzwerts der Plattform, das Erreichen eines vorgegebenen Zustands für das erste Anwendungsprogramm, eine Auslösung eines Alarms oder einer Fehlermeldung an der Plattform, oder das Erreichen eines vorgegebenen Zeitpunkts ist.

Dies kann vorteilhaft dazu genutzt werden, um beispielsweise eine bedarfsorientierte Neukonfiguration von Modulen eines Anwendungsprogramms durchzuführen. Dadurch kann eine vordefinierte, gewünschte Ausführungsperformance des Programmcodes implementiert werden.

In einer Weiterbildung der Erfindung ist es vorgesehen, dass zumindest zwei Anwendungsprogramme, bevorzugt zumindest drei Anwendungsprogramme und besonders bevorzugt zumindest fünf oder zumindest zehn Anwendungsprogramme dynamisch ausgeführt werden.

Dadurch kann erreicht werden, dass eine Menge an Anwendungsprogrammen mit ihren jeweiligen Programmcodes in optimaler Weise auf der Plattform ausgeführt werden, indem eine Abstimmung unter den jeweiligen Modulen der Anwendungsprogramme erfolgen kann.

In einer Weiterbildung der Erfindung ist es vorgesehen, dass das erste und das zweite Anwendungsprogramm identisch sind, der zumindest eine erste und der zumindest eine zweite Programmcode sich jedoch unterscheiden.

Dadurch kann erreicht werden, dass beispielsweise nur die Module beziehungsweise Programmcodes innerhalb eines Anwendungsprogramms neu konfiguriert, neu kompiliert und neu programmiert werden und so eine laufzeitabhängige Verteilung der Module zwischen dem Prozessor und der programmierbaren Logik erzielt wird.

Die erfindungsgemäße Aufgabe wird auch durch ein System eingangs genannter Art gelöst, welches dazu eingerichtet ist, das erfindungsgemäße Verfahren auszuführen.

In einer Weiterbildung der Erfindung ist es vorgesehen, dass das System ferner ein Anwendungs-Verwaltungssystem mit einem Ausführungsspeicher und einer Anwendungsdatenbank umfasst, welches dazu eingerichtet ist, ein Anwendungs-Verwaltungsmodul auszuführen und ein Anwendungsprogramm der Plattform bereitzustellen.

Dadurch wird erreicht, dass auf eine einfache Weise Anwendungen zur Programmierung der Plattform bereitgestellt werden können, insbesondere während des Betriebs der Plattform.

Die Erfindung wird nachfolgend anhand eines in den beigeschlossenen Zeichnungen dargestellten Ausführungsbeispiels näher erläutert. In den Zeichnungen zeigt:
- Fig. 1: schematisch einen Auslieferungsprozess für Plattform-Software,
- Fig. 2: schematisch ein einfindungsgemäßes System zur dynamischen Ausführung eines Anwendungsprogramms,
- Fig. 3-5: Konfigurationsbeispiele für eine dynamische Auslieferung eines Anwendungsprogramms.

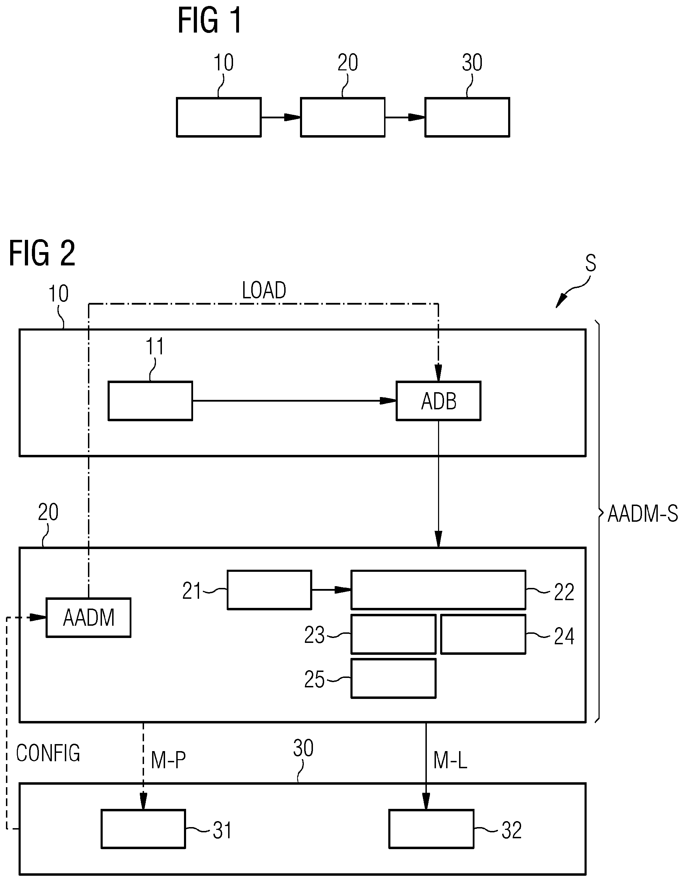

**Fig. 1** zeigt schematisch einen Auslieferungsprozess für Plattform-Software von einem Anwendungsprogramm 10 über eine "delivery pipeline" 20, also die Auslieferung der Software von einer Datenbank zur Plattform 30.

**Fig. 2** zeigt ein einfindungsgemäßes System S zur dynamischen Ausführung eines Anwendungsprogramms 11 einer Anwendung 10 durch eine Plattform 30.

Die Plattform 30 weist einen Prozessor mit einem Programmspeicher 31 und eine programmierbare Logik 32 auf, und ist dazu eingerichtet, das Anwendungsprogramm 10 in Form zumindest eines Programmcodes mittels des Prozessor 31 und der programmierbare Logik 32 auszuführen.

Das System S umfasst ferner ein Anwendungs-Verwaltungssystem AADM-S mit einem Ausführungsspeicher und einer Anwendungsdatenbank ADB, beispielsweise ein App-Store.

Das Anwendungs-Verwaltungssystem AADM-S ist dazu eingerichtet, ein Anwendungs-Verwaltungsmodul AADM auszuführen.

Beispielsweise kann durch das Anwendungs-Verwaltungsmodul AADM eine Konfigurationsabfrage CONFIG an die Plattform 30 durchgeführt werden, um eine aktuelle Auslastung durch den Betrieb eines Anwendungsprogramms auf der Plattform 30 zu ermitteln.

Falls eine Änderung der aktuellen Programmierung des Prozessors 31 oder der Logik 32 erwünscht sein sollte, so kann eine entsprechende Abfrage bei der Anwendungsdatenbank ADB mittels einer entsprechenden Lade-Anfrage LOAD durch das Anwendungs-Verwaltungsmodul AADM durchgeführt werden, um eine Modifikation des Programmcodes auf der Plattform durchzuführen und das Anwendungsprogramm 10, das einer erwünschten Konfiguration entspricht, bereitzustellen.

Unter einer Konfiguration kann im vorliegenden Zusammenhang eine Verteilung von funktionalen Modulen eines Anwendungsprogramms in Form von dementsprechenden Programmcodes M-P zur Ausführung durch den Prozessor 31 und/oder von Programmcodes M-L zur Ausführung durch die programmierbare Logik 32 verstanden werden.

Die Ermittlung des Anwendungsprogramms aus der Datenbank ADB, die Zusammensetzung und Kompilierung beziehungsweise Bildung von Modulen des Anwendungsprogramms 11 zu Programmcodes erfolgt mittels einer sogenannten "delivery pipeline" 20, welche Teil des Anwendungs-Verwaltungssystems AADM-S ist.

Die Erzeugung des Programmcodes kann beispielsweise Frameworks oder andere Bibliotheken 21 sowie FPGA Region Treiber 22, FPGA Manager Treiber 23, FPGA Bridge Treiber 24 oder Vendor FPGA Treiber 25 beinhalten.

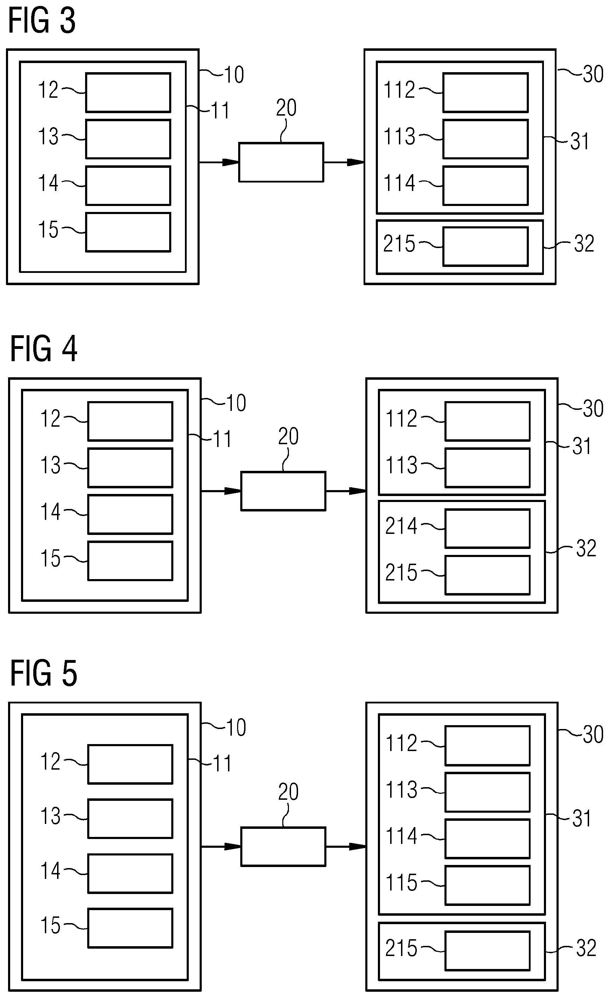

**Fig. 3** bis **Fig. 5** zeigen schematisch die dynamische Auslieferung einer Anwendung 10 auf eine Plattform 30 mittels der "delivery pipeline" 20.

Es ist ein Anwendungsprogramm 11 mit mehreren Softwaremodulen 12-15 dargestellt, welche beispielsweise verschiedene technische Funktionalitäten des Anwendungsprogramms 11 abdecken.

Es kann nun beispielsweise abhängig von der aktuellen Performance eines Anwendungsprogramms, welches von der Plattform ausgeführt wird, eine Anforderung erzeugt werden, eine NeuKonfiguration des Anwendungsprogramms 11 durchzuführen.

In **Fig. 3** ist ein erstes Konfigurationsbeispiel gezeigt, in welchem das Anwendungsprogramm 11 in Module zur Ausführung durch den Prozessor 31 vorbereitet wird, das heißt unter Einbeziehung der notwendigen Bibliotheken, Treiber für die Ausführung durch den Prozessor und dessen Schnittstellen kompiliert und Programmcodes 112-114 gebildet und im Programmspeicher des Prozessors 31 gespeichert.

Ein Modul wird jedoch zur Ausführung durch die programmierbare Logik 32 vorbereitet, das heißt unter Einbeziehung der notwendigen Bibliotheken, Treiber für die Ausführung durch die Logik und deren Schnittstellen kompiliert und ein Programmcode 215 gebildet und die Logik dementsprechend programmiert.

In **Fig. 4** ist ein zweites Konfigurationsbeispiel gezeigt, in welchem das Anwendungsprogramm 11 in Module zur Ausführung durch den Prozessor 31 vorbereitet wird, das heißt unter Einbeziehung der notwendigen Bibliotheken, Treiber für die Ausführung durch den Prozessor und dessen Schnittstellen kompiliert und Programmcodes 112-113 gebildet und im Programmspeicher des Prozessors 31 gespeichert.

Ein Modul wird jedoch zur Ausführung durch die programmierbare Logik 32 vorbereitet, das heißt unter Einbeziehung der notwendigen Bibliotheken, Treiber für die Ausführung durch die Logik und deren Schnittstellen kompiliert und Programmcodes 214-215 gebildet und die Logik dementsprechend programmiert.

In **Fig. 5** ist ein drittes Konfigurationsbeispiel gezeigt, in welchem das Anwendungsprogramm 11 in Module zur Ausführung durch den Prozessor 31 vorbereitet wird, das heißt unter Einbeziehung der notwendigen Bibliotheken, Treiber für die Ausführung durch den Prozessor und dessen Schnittstellen kompiliert und Programmcodes 112-115 gebildet und im Programmspeicher des Prozessors 31 gespeichert.

Ein Modul wird jedoch zur Ausführung durch die programmierbare Logik 32 vorbereitet, das heißt unter Einbeziehung der notwendigen Bibliotheken, Treiber für die Ausführung durch die Logik und deren Schnittstellen kompiliert und ein Programmcode 215 gebildet und die Logik dementsprechend programmiert.

In dieser Konfiguration entspricht der Programmcode 115 sowie der Programmcode 215 dem entsprechenden Modul des Anwendungsprogramms 11. Folglich ist dieselbe Funktionalität für das Modul sowohl zur Ausführung durch den Prozessor 31 als auch zur Ausführung durch die Logik 32 verfügbar und dynamisch, der jeweiligen Situation entsprechend, aufgerufen werden.

### Bezugszeichenliste:

- 10: Anwendung
- 11: Anwendungsprogramm
- 112-115, 214, 215: Programmcode
- 12-15: Software-Modul
- 20: Auslieferung, engl. "delivery pipeline", Verwaltungssystem
- 21: Bibliothek
- 22: FPGA Region Treiber
- 23: FPGA Manager Treiber
- 24: FPGA Bridge Treiber
- 25: Vendor FPGA Treiber
- 30: Plattform
- 31: Prozessor mit Programmspeicher
- 32: programmierbare Logik
- AADM: Anwendungs-Verwaltungsmodul
- ADB: Anwendungsdatenbank
- CONFIG: Konfigurationsabfrage von Prozessor und Logik
- LOAD: Lade-Anfrage für Anwendungsprogramm
- M-L: Programmcode/ Modul/Anwendungslogik für programmierbare Logik
- M-P: Programmcode/ Modul/Anwendungslogik für Prozessor

## Patentansprüche

1. Computer-implementiertes Verfahren zur dynamischen Ausführung zumindest eines Anwendungsprogramms (10) durch eine Plattform (30), welche einen Prozessor mit einem Programmspeicher (31) und eine programmierbare Logik (32) aufweist,
wobei der Prozessor (31) und die programmierbare Logik (32) einen Programmiermodus und einen Ausführungsmodus unterstützen, und
im Programmiermodus von einer Anwendungsdatenbank (ADB) ein erstes Anwendungsprogramm mit zumindest einem ersten Modul in den Programmspeicher und/oder in die programmierbare Logik (32) ausführbar als zumindest ein erster Programmcode geladen und programmiert wird, und
im Ausführungsmodus der zumindest eine erste Programmcode ausgeführt wird,
**dadurch gekennzeichnet, dass** im Ausführungsmodus anhand zumindest eines vorgegebenen Kriteriums durch die programmierbare Logik (32) geprüft wird, ob ein zweites Anwendungsprogramm (11) mit zumindest einem zweiten Modul (12-15) aus der Anwendungsdatenbank (ADB) geladen werden soll, und
wenn dies zutrifft, in den Programmiermodus gewechselt wird, und zumindest das zumindest eine zweiten Modul (12-15) in die programmierbare Logik (32) ausführbar als zumindest ein zweiter Programmcode (112-115, 214-215) geladen wird, dann in den Ausführungsmodus gewechselt wird, in welchem der zumindest eine zweite Programmcode (112-115, 214-215) ausgeführt wird.

2. Verfahren nach Anspruch 1, wobei bei der Prüfung, ob das zweite Anwendungsprogramm (11) geladen werden soll, die Auslastung des Prozessors, des Arbeitsspeichers und des Programmspeichers des Prozessors (31) oder der Programmlogik (32) bei Ausführung des ersten Anwendungsprogramms bestimmt und dementsprechend berücksichtigt wird.

3. Verfahren nach Anspruch 1, wobei bei der Prüfung, ob das zweite Anwendungsprogramm (11) geladen werden soll, eine Auslastung des Prozessors, des Arbeitsspeichers und des Programmspeichers des Prozessors (31), oder der Programmlogik (32) bei Ausführung des zweiten Anwendungsprogramms (11) berechnet, vorzugsweise geschätzt, und dementsprechend berücksichtigt wird.

4. Verfahren nach einem der Ansprüche 2 oder 3, wobei mithilfe der programmierbaren Logik (32) festgelegt wird, ob das erste und/oder das zweite Modul (12-15) im Programmspeicher (31) oder in der programmierbaren Logik (32) gespeichert werden soll, vorzugsweise im Ausführungsmodus.

5. Verfahren nach einem der vorhergehenden Ansprüche, wobei ein Anwendungs-Verwaltungsmodul (AADM), welches durch ein von der Plattform umfasstes Verwaltungssystem ausgeführt wird und welches in die Verbindung zwischen der Anwendungsdatenbank (ADB) und dem Prozessor (31) und der programmierbaren Logik (32) eingefügt ist, festlegt, ob das erste und/oder das zumindest eine zweite Modul (12-15) im Programmspeicher (31) oder in der programmierbaren Logik (32) gespeichert wird, vorzugsweise im Ausführungsmodus.

6. Verfahren nach einem der vorhergehenden Ansprüche, wobei das ausführbar geladene, zumindest eine zweite Modul (12-15) einen entsprechenden zweiten Prozessor-Programmcode (115) zur Ausführung durch den Prozessor (31) im Programmspeicher (31), sowie einen entsprechenden zweiten Logik-Programmcode (215) zur Ausführung durch die programmierbare Logik (32) in der programmierbare Logik (31) umfasst.

7. Verfahren nach einem der vorhergehenden Ansprüche, wobei das vorgegebene Kriterium das Überschreiten eines betrieblichen Grenzwerts der Plattform, das Erreichen eines vorgegebenen Zustands für das erste Anwendungsprogramm, eine Auslösung eines Alarms oder einer Fehlermeldung an der Plattform, oder das Erreichen eines vorgegebenen Zeitpunkts ist.

8. Verfahren nach einem der vorhergehenden Ansprüche, wobei zumindest zwei Anwendungsprogramme, bevorzugt zumindest drei Anwendungsprogramme und besonders bevorzugt zumindest fünf oder zumindest zehn Anwendungsprogramme dynamisch ausgeführt werden.

9. Verfahren nach einem der vorhergehenden Ansprüche, wobei das erste und das zweite Anwendungsprogramm (11) identisch sind, der zumindest eine erste und der zumindest ein zweite Programmcode (112-115, 214-215) sich jedoch unterscheiden.

10. System zur dynamischen Ausführung zumindest eines Anwendungsprogramms (10) durch eine Plattform (30), welche einen Prozessor mit einem Programmspeicher (31) und eine programmierbare Logik (32) aufweist, wobei der Prozessor (31) und die programmierbare Logik (32) einen Programmiermodus und einen Ausführungsmodus unterstützen, und
das System dazu eingerichtet ist, im Programmiermodus von einer Anwendungsdatenbank (ADB) ein erstes Anwendungsprogramm mit zumindest einem ersten Modul in die programmierbare Logik (32) ausführbar als zumindest ein erster Programmcode zu laden, zu programmieren, und im Ausführungsmodus auszuführen, **dadurch gekennzeichnet, dass** das System (S) dazu eingerichtet ist, das Verfahren nach einem der vorhergehenden Ansprüche auszuführen.

11. System nach dem vorhergehenden Anspruch, wobei ferner ein Anwendungs-Verwaltungssystem (AADM-S) mit einem Ausführungsspeicher und einer Anwendungsdatenbank (ADB) umfasst ist, welches dazu eingerichtet ist, ein Anwendungs-Verwaltungsmodul (AADM) auszuführen und ein Anwendungsprogramm (10) der Plattform (30) bereitzustellen.

## Claims

1. Computer-implemented method for the dynamic execution of at least one application program (10) by a platform (30) that has a processor comprising a program memory (31) and has a programmable logic unit (32),
wherein the processor (31) and the programmable logic unit (32) support a programming mode and an execution mode, and,
in the programming mode, a first application program comprising at least one first module is loaded into the program memory and/or into the programmable logic unit (32) so as to be executable as at least one first program code from an application database (ADB) and programmed and,
in the execution mode, the at least one first program code is executed,
**characterized in that**, in the execution mode, the programmable logic unit (32) checks, based on at least one predefined criterion, whether a second application program (11) comprising at least one second module (12-15) should be loaded from the application database (ADB), and
if so, a change is made to the programming mode, and at least the at least one second module (12-15) is loaded into the programmable logic unit (32) so as to be executable as at least one second program code (112-115, 214-215), and a change is then made to the execution mode, in which the at least one second program code (112-115, 214-215) is executed.

2. Method according to Claim 1, wherein, in the check as to whether the second application program (11) should be loaded, the usage level of the processor, of the working memory and of the program memory of the processor (31) or of the programmable logic unit (32) are determined and accordingly taken into consideration during the execution of the first application program.

3. Method according to Claim 1, wherein, in the check as to whether the second application program (11) should be loaded, a usage level of the processor, of the working memory and of the program memory of the processor (31) or of the programmable logic unit (32) is calculated, preferably estimated, and accordingly taken into consideration during the execution of the second application program (11).

4. Method according to either of Claims 2 and 3, wherein the programmable logic unit (32) is used to define whether the first and/or the second module (12-15) should be stored in the program memory (31) or in the programmable logic unit (32), preferably in the execution mode.

5. Method according to one of the preceding claims, wherein an application management module (AADM), which is executed by a management system contained in the platform and which is incorporated into the connection between the application database (ADB) and the processor (31) and the programmable logic unit (32), defines whether the first and/or the at least one second module (12-15) is stored in the program memory (31) or in the programmable logic unit (32), preferably in the execution mode.

6. Method according to one of the preceding claims, wherein the at least one second module (12-15) loaded so as to be executable comprises a corresponding second processor program code (115) for execution by the processor (31) in the program memory (31), and a corresponding second logic program code (215) for execution by the programmable logic unit (32) in the programmable logic unit (32).

7. Method according to one of the preceding claims, wherein the predefined criterion is the exceedance of an operative limit value of the platform, the reaching of a predefined state for the first application program, triggering of an alarm or a fault notification on the platform, or the reaching of a predefined time.

8. Method according to one of the preceding claims, wherein at least two application programs, preferably at least three application programs and particularly preferably at least five or at least ten application programs are executed dynamically.

9. Method according to one of the preceding claims, wherein the first and the second application program (11) are identical, but the at least one first and the at least one second program code (112-115, 214-215) are different.

10. System for the dynamic execution of at least one application program (10) by a platform (30) that has a processor comprising a program memory (31) and has a programmable logic unit (32), wherein the processor (31) and the programmable logic unit (32) support a programming mode and an execution mode, and
the system is configured, in the programming mode, to load a first application program comprising at least one first module into the programmable logic unit (32) so as to be executable as at least one first program code from an application database (ADB), to program same and, in the execution mode, to execute same, **characterized in that** the system (S) is configured to carry out the method according to one of the preceding claims.

11. System according to the preceding claim, furthermore comprising an application management system (AADM-S) comprising an execution memory and an application database (ADB), which system is configured to execute an application management module (AADM) and to provide an application program (10) to the platform (30).

## Revendications

1. Procédé mis en œuvre par ordinateur destiné à l'exécution dynamique d'au moins un programme d'application (10) à l'aide d'une plateforme (30), qui présente un processeur avec une mémoire de programme (31) et une logique programmable (32), dans lequel le processeur (31) et la logique programmable (32) prennent en charge un mode de programmation et un mode d'exécution, et
dans le mode de programmation, un premier programme d'application avec au moins un premier module est chargé et programmé par une base de données d'application (ADB) dans la mémoire de programme et/ou dans la logique programmable (32) de manière exécutable comme au moins un premier code de programme, et
dans le mode d'exécution, le au moins un premier code de programme est exécuté,
**caractérisé en ce que,** dans le mode d'exécution, à l'aide d'au moins un critère prédéfini, il est vérifié, au moyen de la logique programmable (32), si un deuxième programme d'application (11) avec au moins un deuxième module (12-15) doit être chargé à partir de la base de données d'application (ADB), et
si tel est le cas, on passe en mode de programmation et au moins le au moins un deuxième module (12-15) est chargé dans la logique programmable (32) de manière exécutable comme au moins un deuxième code de programme (112-115, 214-215), puis on passe en mode d'exécution dans lequel le au moins un deuxième code de programme (112-115, 214-215) est exécuté.

2. Procédé selon la revendication 1 dans lequel, lors du contrôle visant à déterminer si le deuxième programme d'application (11) doit être chargé, le taux d'utilisation du processeur, de la mémoire de travail et de la mémoire de programme du processeur (31) ou de la logique programmable (32) est déterminé lors de l'exécution du premier programme d'application et est pris en compte en conséquence.

3. Procédé selon la revendication 1 dans lequel, lors du contrôle visant à déterminer si le deuxième programme d'application (11) doit être chargé, un taux d'utilisation du processeur, de la mémoire de travail et de la mémoire de programme du processeur (31) ou de la logique programmable (32) est calculé, de préférence estimé, lors de l'exécution du deuxième programme d'application (11), et est pris en compte en conséquence.

4. Procédé selon l'une des revendications 2 ou 3, dans lequel, à l'aide de la logique programmable (32), il est déterminé si le premier et/ou le deuxième module (12-15) doit être enregistré dans la mémoire de programme (31) ou dans la logique programmable (32), de préférence dans le mode d'exécution.

5. Procédé selon l'une des revendications précédentes, dans lequel un module de gestion d'application (AADM), qui est exécuté par un système de gestion compris dans la plateforme et qui est inséré dans la liaison entre la base de données d'application (ADB) et le processeur (31) et la logique programmable (32), détermine si le premier et/ou le au moins un deuxième module (12-15) est enregistré dans la mémoire de programme (31) ou dans la logique programmable (32), de préférence dans le mode d'exécution.

6. Procédé selon l'une des revendications précédentes, dans lequel le au moins un deuxième module (12-15) chargé de manière exécutable comprend un deuxième code de programme de processeur (115) correspondant destiné à être exécuté par le processeur (31) dans la mémoire de programme (31), et un deuxième code de programme de logique (215) correspondant destiné à être exécuté par la logique programmable (32) dans la logique programmable (31).

7. Procédé selon l'une des revendications précédentes, dans lequel le critère prédéfini est le dépassement d'une valeur limite opérationnelle de la plateforme, l'atteinte d'un état prédéfini pour le premier programme d'application, un déclenchement d'une alarme ou d'un message d'erreur sur la plateforme, ou l'atteinte d'un moment prédéfini.

8. Procédé selon l'une des revendications précédentes, dans lequelau moins deux programmes d'application, de préférence au moins trois programmes d'application et de manière particulièrement préférée au moins cinq ou au moins dix programmes d'application sont exécutés de manière dynamique.

9. Procédé selon l'une des revendications précédentes, dans lequel le premier et le deuxième programmes d'application (11) sont identiques, mais les au moins un premier et au moins un deuxième codes de programme (112-115, 214-215) sont différents.

10. Système destiné à l'exécution dynamique d'au moins un programme d'application (10) à l'aide d'une plateforme (30), comprenant un processeur avec une mémoire de programme (31) et une logique programmable (32), dans lequel le processeur (31) et la logique programmable (32) prennent en charge un mode de programmation et un mode d'exécution, et
le système est conçu dans le mode de programmation pour charger et programmer et dans le mode d'exécution pour exécuter, à partir d'une base de données d'application (ADB), un premier programme d'application comprenant au moins un premier module dans la logique programmable (32) exécutable sous la forme d'au moins un premier code de programme,
**caractérisé en ce que** le système (S) est conçu pour exécuter le procédé selon l'une quelconque des revendications précédentes.

11. Système selon la revendication précédente, lequel comprend en outre un système de gestion d'application (AADM-S) avec une mémoire d'exécution et une base de données d'application (ADB), et qui est conçu pour exécuter un module de gestion d'application (AADM) et fournir un programme d'application (10) à la plateforme (30).
